# EUROPEAN PATENT SPECIFICATION

(11) **EP 2 337 279 B1**
(45) Date of publication and mention of the grant of the patent: **20.02.2013**
(21) Application number: 09306285.9
(22) Date of filing: 18.12.2009
(51) Int. Cl.: H04L 12/721, H04L 12/751, H04L 12/711, H04L 12/703, H04L 12/735

(54) **Method of protecting a data transmission through a network**
Verfahren zum Schutz einer Datenübertragung durch ein Netz
Procédé de protection de transmission de données sur un réseau

(43) Date of publication of application: 22.06.2011
(73) Proprietor: Alcatel Lucent, 75007 Paris (FR)
(72) Inventor: Paparella, Andrea, 21052 Busto Arsizi (Varese) (IT); Gemelli, Riccardo, 20019 Settimo M.se (Milano) (IT); Sestito, Vincenzo, 20127 Milano (IT)
(74) Representative: Urlichs, Stefan

(56) References cited:
- EP-A2- 1 473 887
- US-A1- 2002 093 954

## Description

### Field of the invention

The invention relates to a method of protecting a data transmission through a network.

### Background

When connecting two clients via a working path and a connection path that is disjoint to the working path through a network, network failures may affect the working path or the protection path.

The European patent application EP 1473 887 A2 discloses a method of protecting a data transmission through a network comprising different steps. A number of possible paths connecting two network nodes is determined. Furthermore, a working path and a respective protection path connecting the two network nodes are determined, wherein the protection path is chosen disjoint from the respective working path. Furthermore new protection paths are determined, which protect against a number of single network resource failures affecting any of the working path and the protection path, and against a number of additional network resource failures affecting the non-affected path. The working path and the protection path are established, and the backup network resources forming the new protection paths are reserved.

### Summary

A method of protecting a data transmission through a network is proposed.

A first client is connected to first edge network nodes, and a second client is connected to second edge network nodes.

A number of possible paths connecting any of the first edge network nodes with any of the second edge network nodes is determined.

Furthermore, k sets are determined, using the determined possible paths. Each set contains a working path and a respective protection path connecting any of the first edge network nodes with any of said second edge network nodes. The protection path is chosen disjoint from the respective working path.

For each of the sets, new protection paths are determined and added to the respective set, such that a new protection path protects
- against a maximised number of single network resource failures affecting any of the working path and the protection path, and
- against a maximised number of additional network resource failures affecting the non-affected path.

1'hat set is chosen, which has a minimum overall cost with respect to network resources needed for establishing the working path and the protection path and for reserving backup network resources forming the new protection paths of the chosen set.

A cost of a link is added to an overall cost of a set only once, in the case that multiple new protection paths share that link.

The working path and the said protection path of the chosen set are established.

Finally, the backup network resources forming the new protection paths are reserved.

### Brief description of the drawings

Figure 1 shows a network connecting two clients.
Figure 2 shows the network and a first new protection path.
Figure 3 shows the network and a second new protection path.
Figure 4 shows the network and a third new protection path.
Figure 5 shows different new protection paths that are determined for protecting against different network resource failures.
Figure 6 shows a flow chart of a method for determining sets of paths.
Figure 7 shows a device for protecting a data transmission through a network.

### Description of Embodiments

Proposed is a method for connecting two clients via a network.

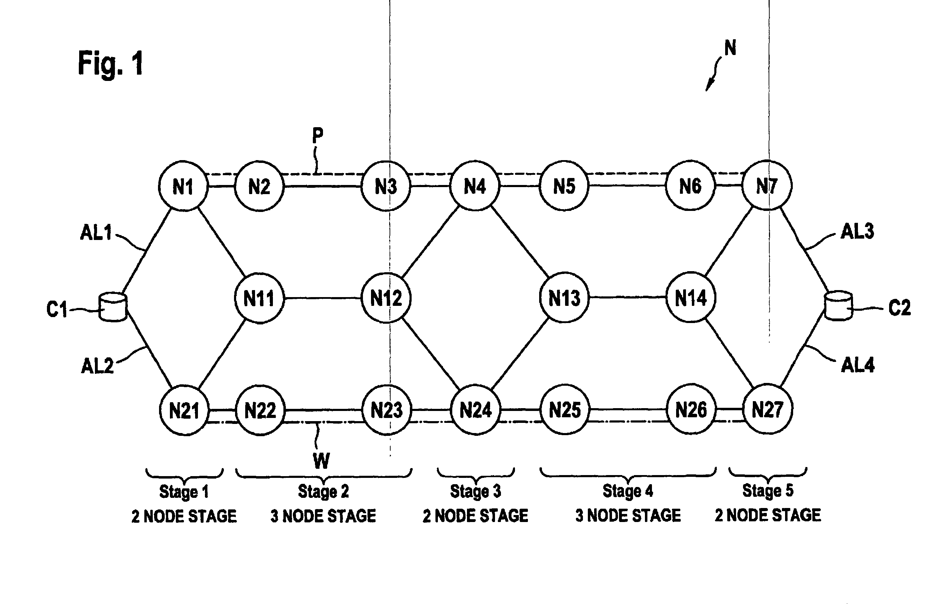

Figure 1 shows a network N which connects two clients C1, C2. The client C1 is connected via an attachment link AL1 to an edge network node N1, as well as via an attachment link AL2 to an edge network node N21. The client C2 is connected via an attachment link AL3 to an edge network node N3, as well as via an attachment link AL4 to an edge network node N27. The principle of attaching a client to two different edge network nodes is known under the term Dual Attachment.

By connecting the clients C1, C2 via two respective edge network nodes, it is ensured that a single failure of one of the edge network nodes N1, N21, N7, N27 will not lead to a total disconnection of the clients C1, C2.

Figure 1 illustrates the topology of the network N as well as a working path W and a protection path P. The working path W leads from the network node N21 to the network node N27, while the protection path P leads from the network N1 to the network node N7.

The network resources of the network N are given in the form of the network nodes of the network as well the links connecting the network nodes.

In case, that a single network resource failure affects any of the working path W and the protection path P, a connection between the two clients C1, C2 is still ensured, since the protection path P is chosen disjoint to the working path W.

In case, that any of the working path W and the protection path P is affected by a single network resource failure, a new protection path is needed for protecting against an additional single network resource failure.

A method for reserving backup network resources within the network N for establishing a new protection path for protecting against an additional network resource failure is proposed.

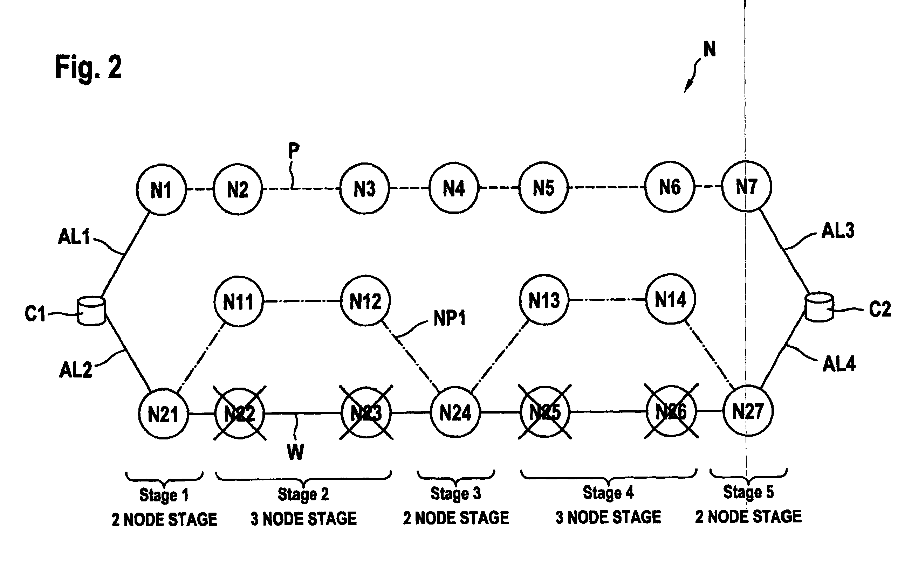

Figure 2 shows the network N with all network nodes shown in Figure 1, but without explicitly showing the links connecting the nodes. The clients C1, C2 are attached to the network N in the same way as previously described. Furthermore, the working path W and the protection path P are chosen as previously described.

Furthermore, a new protection path NP1 is shown. The new protection path leads from the node N21 via the nodes N 11, N 12, N24, N 13, N 14 to the node N27. The new protection path NP1 is chosen such, that it can serve as a new protection path for a maximised number of single network resources failures along the working and the protection path W, P.

As shown in Figure 2, the new protection path NP1 is a new protection path for single network resource failures occurring at any of the network nodes N22, N23, N25, N26 or any of the links connected to these nodes. Furthermore, the new protection path NP1 is chosen such that it is disjoint from the protection path P which is the non-affected path. Thus, the new protection path NP1 is also a new protection path for single network resource failures occurring at any of the network nodes N2, N3, N5, N6, N4 or any of the links connected to these nodes. Thus, the new protection path NP1 can serve as a new protection path for a maximised number of single network resources failures along the working and the protection path W, P.

As it can be clearly seen, the choice of the new protection path relates to an optimization problem. Choosing another new protection path, that would protect against a smaller number of single network resource failures along the working path W and the protection path, but not against a smallest number of single network resource failures along the working path W and the protection path, would still be a solution that maximises the number of single network resource failures along the working path W and the protection path for which the new protection path may be used.

Network resources may be network nodes or links connected to the network nodes.

Having determined the new protection path NP1, those network resources, which would be needed for determining or establishing the new protection path NP1 at a later point of time, are reserved within the network N.

By reserving the backup network resources within the network N, it is ensured, that in case of certain network failures, as previously mentioned, the new protection path NP1 can be determined and established within the network N disjoint to the non-affected path for protecting the connection between the two clients C1, C2 against additional single network resource failures affecting either the new protection path NP1 or the non-affected path.

The new protection path NP1 is chosen, such that it is maximally disjoint from the affected path W.

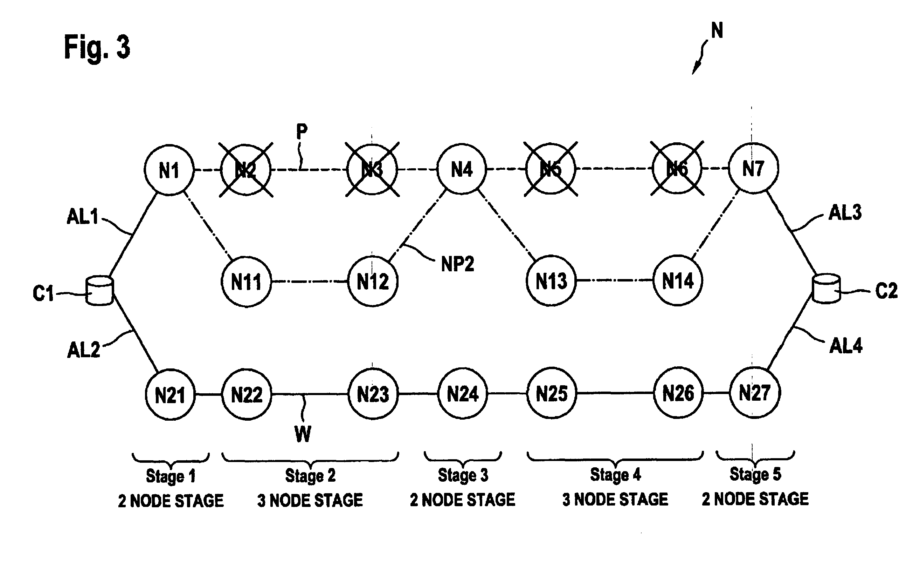

Figure 3 shows the network N as previously shown in Figure 1 with all the network nodes, but without explicitly showing the links connecting the nodes.

The clients C1, C2 are attached to the network N in the same way as previously described. Furthermore, the working path W and the protection path P are chosen as previously described.

Figure 3 shows also a new protection path NP2, which leads from the network node N 1 via the network nodes N 11, N 12, N4, N 13, N 14 to the network node N7. Furthermore, the new protection path NP2 is chosen such that it is disjoint from the non-affected path W. Thus, the new protection path NP2 is also a new protection path for single network resource failures occurring at any of the network nodes N22, N23, N25, N26, N24 or any of the links connected to these nodes. Thus, the new protection path NP2 can serve as a new protection path for a maximised number of single network resources failures along the working and the protection path W, P.

Those backup network resources, which would be needed for establishing the new protection path NP2, are reserved within the network N. This enables to determine or establish the new protection path NP2 at a later point of time in the case that a single network resource failure occurs as previously described.

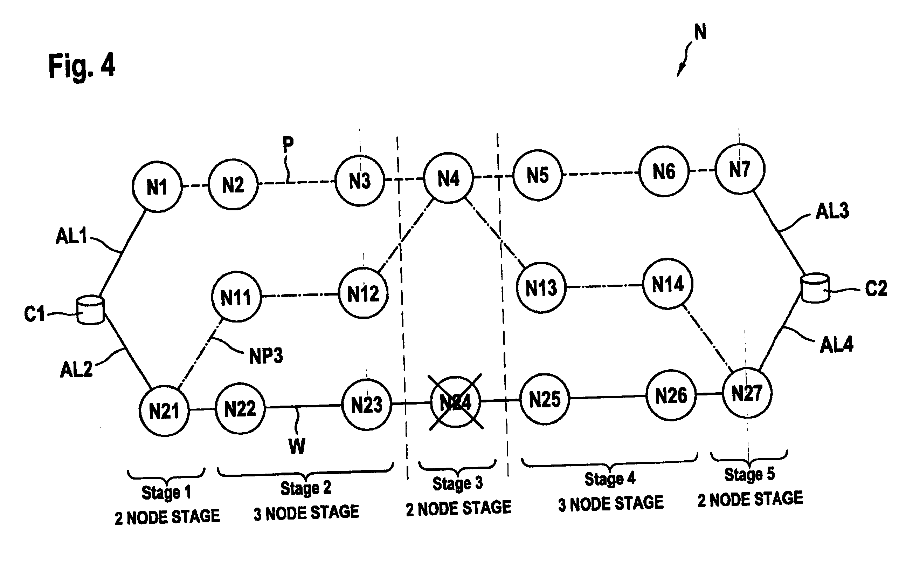

Figure 4 shows the network N as previously shown in Figure 1 with all the network nodes, but without explicitly showing the links connecting the nodes. The clients C1, C2 are attached to the network N in the same way as previously described. Furthermore, the working path W and the protection path P are chosen as previously described.

A single network resource failure affects the node N24 or one of the links connected to the node N24. Since the node N24 is contained within a central stage of the network N that contains only two network nodes N24, N4, for connecting other stages of the network N, the topology of the network N does not allow to choose a new protection path that is disjoint from the non-affected path P. Therefore, the new protection path NP3 is chosen such, that it is at least maximally disjoint to the non-affected path P. The new protection path NP3 is also chosen as a path that is maximally disjoint to the affected path W.

Due to the topology of the network N, the new protection path NP3 has to be chosen such, that it has the network node N4 in common with the non-affected path P. Therefore, the new protection path does not protect against an additional network resource failure affecting the network node N4, but protects against any other additional single network resource failure affecting any other network node or links connected to the node.

The backup network resources, which would be necessary for establishing the new protection path NP3 are reserved within the network N, for making it possible to determine and establish the new protection path NP3 at a later point of time in case of a single network resource failure affecting the node N24 or the links connected to it.

In the case that different new protection paths obeying the conditions described above can be established via different network resources of the network, that new protection path is chosen, which has the smallest costs with respect to a least cost routing algorithm.

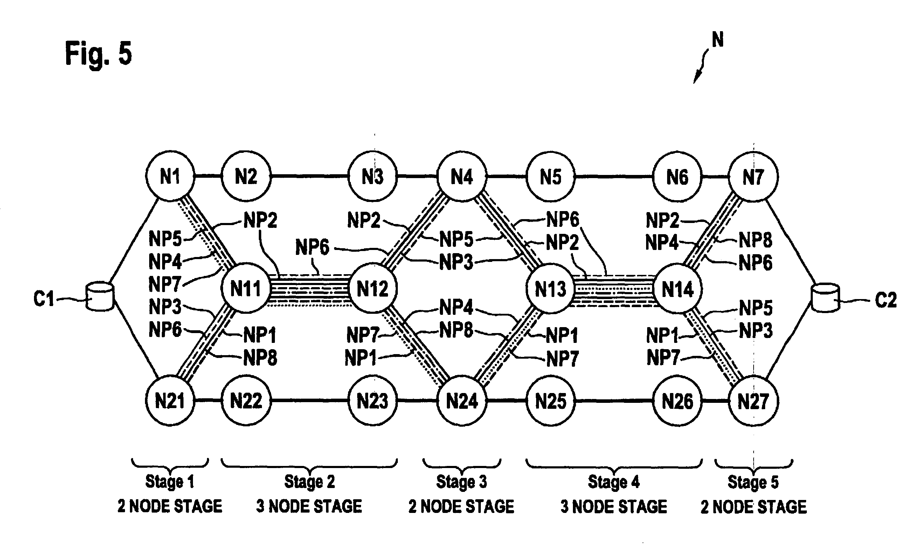

Figure 5 shows the network N as previously shown in Figure 1 with all the network nodes, but without explicitly showing the links connecting the nodes. The clients C1, C2 are attached to the network N in the same way as previously described. Furthermore, the working path W and the protection path P are chosen as previously described.

Figure 5 shows furthermore new protection paths NP1, ... , NP8 which are determined for forming new protection paths for each possible single network resource failure affecting either the working path W or the protection path P.

The new protection paths NP1, ... , NP8 are determined such, that they protect also against a maximised number of network resource failures.

It will now be described in detail, in which way the different new protection paths NP1, ... , NP8 are determined.

The new protection path NP1 protects against a single network resource failure occurring at the network node N22, N23, N25, N26 or the links connected to these nodes. The new protection path NP1 is chosen such that it is disjoint to the non-affected path P and maximally disjoint to the affected path W. The new protection path NP1 goes along the nodes N21, N11, N 12, N24, N13, N14, N27.

The new protection path NP2 protects against a single network resource failure occurring at the network node N2, N3, N5, N6 or the links connected to these nodes. The new protection path NP1 is chosen such that it is disjoint to the non-affected path W and maximally disjoint to the affected path P. The new protection path NP2 goes along the nodes N 1, N 11, N 12, N4, N 13, N 14, N7.

For the case that the node N4 is affected by a single network resource failure, the new protection path NP4 is determined. Since the topology of the network does not allow choosing a new protection path NP4 totally disjoint to the non-affected path W, the new protection path NP4 is chosen maximally disjoint to the non-affected path W, having in common the node N24. Furthermore, the new protection path NP4 is chosen such that it is maximally disjoint to the affected path P. The new protection path NP4 goes along the nodes N 1, N11, N12, N24, N13, N14, N7.

For the case, that the network node N24 is affected by a single network resource failure, the new protection path NP3 is chosen. Since the topology of the network does not allow choosing a new protection path NP3 totally disjoint to the non-affected path P, the new protection path NP3 is chosen maximally disjoint to the non-affected path P, having in common the node N4. Furthermore, the new protection path NP3 is chosen such that it is maximally disjoint to the affected path W. The new protection path NP3 goes along the nodes N21, N11, N12, N4, N13, N14, N27.

For the case, that the network node N1 is affected by a single network resource failure, a new protection path NP6 is chosen as a new protection path obeying the conditions for choosing a new protection path as previously described above. The new protection path NP6 goes along the nodes N21, N 11, N 12, N4,N13,N14,N7.

For the case, that the network node N21 is affected by a single network resource failure, a new protection path NP5 is chosen as a new protection path obeying the conditions for choosing a new protection path as previously described above. The new protection path NP5 goes along the nodes N1, N11, N12, N4, N13, N14, N27.

For the case, that the network node N7 is affected by a single network resource failure, a new protection path NP7 is chosen as a new protection path obeying the conditions for choosing a new protection path as previously described above. The new protection path NP7 goes along the nodes N 1, N 11, N12, N24, N13, N14, N27.

For the case, that the network node N27 is affected by a single network resource failure, a new protection path NP8 is chosen as a new protection path obeying the conditions for choosing a new protection path as previously described above. The new protection path NP8 goes along the nodes N21, N11, N12, N24, N13, N14, N7.

By choosing the new protection paths as previously described, a new protection path protects against a maximum number of additional single network resource failures affecting the non-affected path.

Furthermore, those backup network resources, which would be needed for determining or establishing at a later point of time the new protection paths NP1, ... , NP8, are reserved within the network.

Furthermore, the backup network resources are reserved such, that in the case that multiple new protection paths rely on a same link, these multiple new protection paths share a same transmission capacity via this link. The rational behind this is, that due to a single network resource failure affecting either the working or the protection path W, P, only one of the multiple new protection path has to be actually established via this link. Therefore, only the new established protection path will use a transmission capacity via this link. Therefore, it is possible to reduce the amount of transmission capacity that has to be reserved via a link, by reserving the same transmission capacity via the link for multiple new protection paths. A transmission capacity via a link may be a certain data rate provided via that link.

According to the previous Figure 5, the working path W and the protection path P have been provided. Depending on the network topology and the provided paths W,P, the new protection paths NP1, ... , NP8 have been chosen such that certain conditions are obeyed.

In the case, where for a single network resources failure different paths obey these rules qualifying them as new protection paths, that path is chosen as a new protection path which has a minimum cost with respect to a least cost routing algorithm.

Depending on a topology of a network, the overall costs for reserving the backup network resources and for establishing the working path W and the protection path P, may be reduced by choosing a different working path W and a different protection path P as well as different new protection paths.

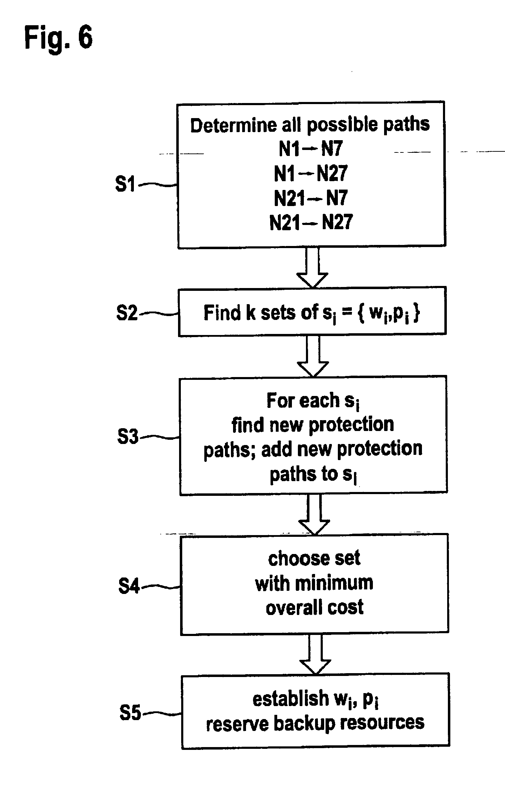

Therefore, a method for finding a solution providing the same protection for the data transmission, but with minimum overall costs is proposed. For this, Figure 6 shows a flow chart with different steps of this method.

In a first step S1, a number of possible paths connecting any of the edge network nodes N1, N21 with any of the edge network nodes N7, N27 are determined. These are the paths for a connection of the node N1 with the node N7, the node N1 with the node N27, the node N21 with the node N7 and the node N21 with the node N27. Determination of these paths can be carried out using algorithms which are already known for finding paths through a network.

In the step S2, k sets sₖ with index i=1...k are determined, wherein each set sᵢ contains a working path wᵢ connecting any of the edge nodes N 1, N21 with any of the edge nodes N7, N27 and a protection path pᵢ which is disjoint to the working path wᵢ. The k sets sₖ can be determined, by choosing them from all those determined possible connection connecting the edge nodes, as previously described above.

Within the step S2, one will find different sets sₖ, that provide a working path wᵢ and a disjoint protection path pᵢ.

Within the step S3, for each set sᵢ, new protection paths are determined and added to the respective set. The new protection paths are chosen such that a new protection path is disjoint from the non affected path, and such that it is a new protection path for a maximum number of single network resource failures. The new protection paths are determined such that for each possible single network resource failure along the working path wᵢ and the protection path pᵢ, a new protection path protects also against a maximised number of additional network resource failures affecting the non-affected path.

Within the step S4, that set is chosen which has a minimum overall cost with respect to the network resources needed for establishing the working path and the protection path and for reserving the backup network resources forming the new protection paths of that set.

For considering the overall cost of a set, a cost of a link is added to the overall cost only once, in the case that multiple new protection paths share this same link.

Within the step S5, the working path and the protection path of the chosen set are established. Furthermore, the backup network resources needed for establishing the new protection paths of this set at a later point of time are reserved. This reservation is done such, that new protection paths relying on a same link share a same transmission capacity via this link.

Preferably, all links are assigned a same cost value. This cost value may be the cost value equal to one.

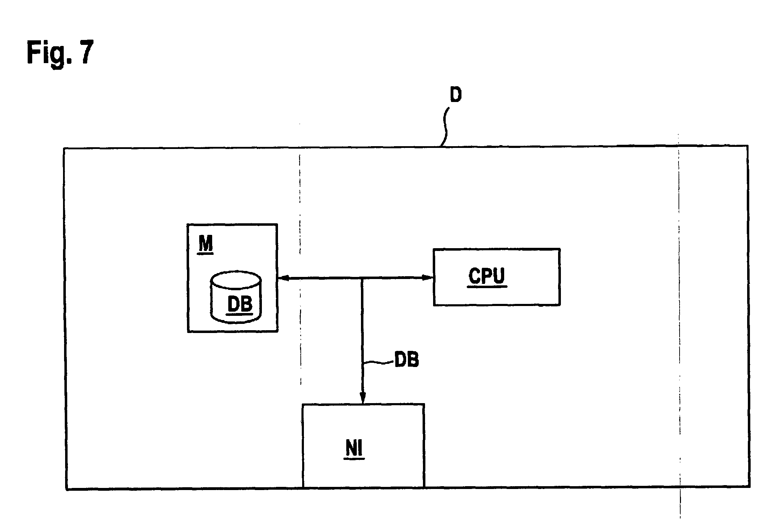

Figure 7 shows a device for protecting a data transmission through a network. The device D contains a memory M for storing information within a data base DB. Furthermore, the device D contains a processor CPU. Further still, the device D contains a network interface NI. The memory M, the processor CPU and the network interface NI are connected via a data bus DB.

The device D receives from other network nodes network topology information via the network interface NI according to different protocols. A first protocol is the Open Shortest Path First Protocol, which is used for collecting topology information, as defined in the paper RFC 2328 (1998) and as updated by the paper RFC 5709 (2009). The protocol OSPF belongs to the Internet Protocol (IP) suite. For networks supporting the protocol Generalized Multipath Label Switching (GLMPS), the protocol Open Shortest Path First-Traffic Engineering (OSPF-TE) is supported by the network interface NI, as defined in the paper RFC 3630 (2003) and as updated by the paper RFC 4203 (2005).

A further protocol for collecting network information via the network interface NI is the routing protocol Intermediate System to Intermediate System (IS-IS), as defined in the paper ISO/IEC 10589 (2002) for use with the Connectionless Network Protocol (CLNP), and as published in the paper RFC 1142 (1990) for use in conjunction with the Internet Protocol. An extension of IS-IS for support of Generalized Multi Path Label Switching (GMPLS) is defined in the paper RFC 5307 (2008).

A further protocol for collection topology information is the Link Management Protocol (LMP). For using the LMP protocol in conjunction with the Internet Protocol, it is referred to the paper RFC 4204 (2005).

The network information, also called management information, which is collected by the network node NN from other network nodes as well as from the network management system (NMS) is stored within the database DB. The Structure of Management Information (SMI), as described in the paper RFC 2578 (1999), and the Management Information Base (MIB), as described in the paper RFC 3418 (2002), are used for describing management information exchanged by the Simple Network Management Protocol (SNMP), as defined in the paper RFC 1157 (1990). The structure of the database DB is derived from the MIB information of each involved technologies. Another meta-language for defining network information is the Information Model (IM) for describing information exchanged by the Common Management Information Protocol (CMIP), as defined in the standard ITU-T X.71 1. For collecting information via the CMIP protocol, the network interface NI supports the CMIP protocol.

Furthermore, the network interface NI supports the protocol for collecting network information according to the Transactional Language 1 (TL1) as defined in the document "GR-831-CORE, Language for Operations Application Messages, Issue 1, November 1996, Telcordia".

The interface NI is adapted to support an exchange of messages with network resources for reserving these network resources.

The processor CPU is configured to determine a working path and a protection path as previously described above.

The processor CPU is furthermore configure to determine a new protection path, such that in case of a failure along the working path and the protection path, the new protection path is a new protection path for a maximised number of single network resource failures along the working path and the protection path.

The processor CPU is adapted to reserves those backup network resources, which would be needed for determining or establishing the new protection paths at a later point of time in case of a single network resource failure. The processor CPU does so, by exchanging with the backup network resources messages via the network interface NI.

The processor CPU is furthermore configured to carry out the steps of the proposed method previously described.

## Claims

1. Method of protecting a data transmission through a network (N),
wherein a first client (C1) is connected to first edge network nodes (N1, N21), wherein a second client (C2) is connected to second edge network nodes (N7, N27),
comprising:
- determining a number of possible paths connecting any of the first edge network nodes (N1, N21) with any of the second edge network nodes (N7, N27),
- determining k sets (sₖ) using said determined possible paths, wherein each set contains a working path and a respective protection path connecting any of said first edge network nodes (N1, N21) with any of said second edge network nodes (N7, N27), and wherein the protection path is chosen disjoint from the respective working path,
- for each of said sets, determining new protection paths for respective possible single network resource failures affecting either the working path or the protection path of a respective set and adding each new protection path to the respective set, such that said new protection path protects
- against a maximised number of single network resource failures affecting any of said working path and said protection path, and
- against a maximised number of additional network resource failures affecting the non-affected path,
wherein, in case different new protection paths protect against said maximised number of possible single network resource failures and said maximised number of additional network resource failures, that path is chosen as said new protection path, which has a minimum cost with respect to a least cost algorithm,
- choosing that set, which has a minimum overall cost with respect to network resources needed for establishing the working path and the protection path and for reserving backup network resources forming the new protection paths of the chosen set, wherein a cost of a link is added to an overall cost of a set only once, in the case that multiple new protection paths share said link,
- establishing said working path and said protection path of said set,
- reserving said backup network resources forming said new protection paths.

2. Method according to claim 1
wherein said backup network resources are reserved, such that new protection paths relying on a same link share a same transmission capacity via said link.

3. Device for protecting a data transmission through a network,
adapted to carry out the steps of any of the claims 1 or 2.

## Patentansprüche

1. Verfahren zum Schutz einer Datenübertragung durch ein Netzwerk (N), wobei ein erster Client (C1) an erste Randnetzwerkknoten (N1, N21) angeschlossen ist, wobei ein zweiter Client (C2) an zweite Randnetzwerkknoten (N7, N27) angeschlossen ist, umfassend:
- Ermitteln einer Anzahl von möglichen Pfaden, die einen jeden der ersten Randnetzwerkknoten (N1, N21) mit einem jeden der zweiten Randnetzwerkknoten (N7, N27) verbinden,
- Ermitteln von k Sätzen (sₖ) unter Verwendung der besagten ermittelten möglichen Pfade, wobei jeder Satz einen Arbeitspfad und einen jeweiligen Schutzpfad, welcher einen jeden der besagten ersten Randnetzwerkknoten (N1, N21) mit einem jeden der besagten zweiten Randnetzwerkknoten (N7, N27) verbindet, umfasst, und wobei der Schutzpfad disjunkt von dem jeweiligen Arbeitspfad gewählt wird,
- für einen jeden der besagten Sätze, Ermitteln von neuen Schutzpfaden für jeweilige mögliche Ausfälle einzelner Netzwerkressourcen, welche entweder den Arbeitspfad oder den Schutzpfad eines jeweiligen Satzes beeinflussen, und Hinzufügen eines jeden neuen Schutzpfads zu dem jeweiligen Satz, so dass der besagte neue Schutzpfad gegen
- eine maximierte Anzahl von einzelnen Netzwerkressourcenausfällen, welche entweder den besagten Arbeitspfad oder den besagten Schutzpfad beeinflussen, und
- eine maximierte Anzahl von Ausfallen zusätzlicher Netzwerkressourcen, welche den nicht beeinflussten Pfad beeinflussen,
schützt,
wobei, wenn unterschiedliche neue Schutzpfade gegen die besagte maximierte Anzahl von möglichen Ausfällen einzelner Netzwerkressourcen und die besagte maximierte Anzahl von Ausfällen zusätzlicher Netzwerkressourcen schützen, der Pfad mit minimalen Kosten in Bezug auf einen Minimalkostenalgorithmus als der besagte neue Schutzpfad gewählt wird,
- Auswählen des Satzes mit minimalen Gesamtkosten in Bezug auf Netzwerkressourcen, die für den Aufbau des Arbeitspfads und des Schutzpfads und für die Reservierung von Backup-Netzwerkressourcen, welche die neuen Schutzpfade des ausgewählten Satzes bilden, benötigt werden, wobei die Kosten einer Verbindungsstrecke nur einmal zu den Gesamtkosten eines Satzes hinzugefügt werden, wenn sich mehrere neue Schutzpfade die besagte Verbindungsstrecke teilen,
- Aufbauen des besagten Arbeitspfads und des besagten Schutzpfads des besagten Satzes,
- Reservieren der besagten Backup-Netzwerkressourcen, welche die besagten neuen Schutzpfade bilden.

2. Verfahren nach Anspruch 1,
wobei die besagten Backup-Netzwerkressourcen derart reserviert werden, dass sich neue Schutzpfade, die sich auf eine selbe Verbindungsstrecke stützen, eine selbe Übertragungskapazität über die besagte Verbindungsstrecke teilen.

3. Vorrichtung zum Schutz einer Datenübertragung durch ein Netzwerk, aufgelegt für das Durchführen der Schritte eines beliebigen der Ansprüche 1 oder 2.

## Revendications

1. Procédé de protection d'une transmission de données à travers un réseau (N),
dans lequel un premier client (C1) est connecté à des premiers noeuds de réseau de bord (N1, N21), dans lequel un deuxième client (C2) est connecté à des deuxièmes noeuds de réseau de bord (N7, N27),
comprenant les étapes suivantes :
- déterminer un nombre de chemins éventuels reliant l'un quelconque des premiers noeuds de réseau de bord (N1, N21) à l'un quelconque des deuxièmes noeuds de réseau de bord (N7, N27),
- déterminer k ensembles (sₖ) en utilisant lesdits chemins éventuels déterminés, dans lequel chaque ensemble contient un chemin de travail et un chemin de protection respectif reliant l'un quelconque desdits premiers noeuds de réseau de bord (N1, N21) à l'un quelconque desdits deuxièmes noeuds de réseau de bord (N7, N27), et dans lequel le chemin de protection est choisi de sorte à être détaché du chemin de travail respectif,
- pour chacun desdits ensembles, déterminer de nouveaux chemins de protection pour des défaillances de ressource de réseau uniques, éventuelles et respectives affectant le chemin de travail ou le chemin de protection d'un ensemble respectif et ajouter chaque nouveau chemin de protection à l'ensemble respectif, de sorte que ledit nouveau chemin de protection protège
- contre un nombre maximisé de défaillances de ressource de réseau uniques affectant l'un quelconque parmi ledit chemin de travail et ledit chemin de protection, et
- contre un nombre maximisé de défaillances de ressource de réseau supplémentaires affectant le chemin non affecté,
dans lequel, dans le cas où de nouveaux chemins de protection différents protègent contre ledit nombre maximisé de défaillances de ressource de réseau uniques éventuelles et ledit nombre maximisé de défaillances de ressource de réseau supplémentaires, ce chemin est choisi comme ledit nouveau chemin de protection, qui a un coût minimum par rapport à un algorithme moins coûteux,
- choisir cet ensemble, qui a un coût global minimum par rapport à des ressources de réseau nécessaires pour établir le chemin de travail et le chemin de protection et pour réserver des ressources de réseau de secours formant les nouveaux chemins de protection de l'ensemble choisi, dans lequel un coût d'une liaison est ajouté une seule fois à un coût global d'un ensemble, dans le cas où de multiples nouveaux chemins de protection partagent ladite liaison,
- établir ledit chemin de travail et ledit chemin de protection dudit ensemble,
- réserver lesdites ressources de réseau de secours formant lesdits nouveaux chemins de protection.

2. Procédé selon la revendication 1,
dans lequel lesdites ressources de réseau de secours sont réservées, de sorte que de nouveaux chemins de protection ayant recours à une même liaison partagent une même capacité de transmission par l'intermédiaire de ladite liaison.

3. Dispositif pour protéger une transmission de données à travers un réseau, adapté pour exécuter les étapes selon l'une quelconque des revendications 1 ou 2.
